# EUROPÄISCHE PATENTANMELDUNG

(11) **EP 4 287 477 A1**
(43) Veröffentlichungstag der Anmeldung: **06.12.2023**
(21) Anmeldenummer: 22176718.9
(22) Anmeldetag: 01.06.2022
(51) Int. Cl.: H02M 1/36, H02M 7/219, H02M 7/12, H02M 5/10

(54) **DREIPHASEN-GLEICHRICHTER MIT TRANSFORMATOR, GESTEUERTER SECHSPULS-BRÜCKENSCHALTUNG, ZWISCHENKREISKONDENSATOR UND VORLADESCHALTUNG**

(71) Anmelder: AEG Power Solutions GmbH, 59581 Warstein-Belecke (DE)
(72) Erfinder: Klocke, Johanna-Luise, 33142 Büren (DE); Vogt, Thorsten, 59929 Brilon (DE)
(74) Vertreter: Schäperklaus, Jochen

(57) **Zusammenfassung**

Die Erfindung betrifft Dreiphasen-Gleichrichter (G)
- mit einem Eingang (1) mit drei Anschlüssen (11, 12, 13),
- mit drei steuerbaren Schaltern (21, 22, 23),
- mit einem Dreiphasenwechselstromtransformator (3) mit einer Primärseite mit drei Primärwicklungen (31, 32, 33) und einer Sekundärseite mit drei Sekundärwicklungen (34, 35, 36),
- mit einer gesteuerten Sechspuls-Brückenschaltung (4) mit einem Wechselstromeingang mit drei Außenleiteranschlüssen und einem Gleichstromausgang mit zwei Gleichrichteranschlüssen,
- mit einem Zwischenkreiskondensator (5),
- mit einer Vorladeschaltung (7), umfassend
- einer ersten Reihenschaltung (71) mit einem Widerstandsbauelement (712) mit einem negativen Temperaturkoeffizienten und
- einer zweiten Reihenschaltung (72) mit einem Widerstandsbauelement (722) mit einem negativen Temperaturkoeffizienten,

- und
- mit einer Steuerung (8) zur Steuerung der drei steuerbaren Schalter (21, 22, 23),
- wobei jeder Anschluss (11, 12, 13) des Eingangs (1) mit einem Außenleiter eines Dreiphasenwechselstromnetzes verbunden werden kann,
- wobei jeder Anschluss (11, 12, 13) des Eingangs (1) über einen der steuerbaren Schalter (21, 22, 23) mit einem Außenleiteranschluss einer der Primärwicklungen (31, 32, 33) verbunden ist,
- wobei ein Außenleiteranschluss jeder der Sekundärwicklungen (34, 35, 36) mit einem Außenleiteranschluss des Wechselstromeingangs der Sechspuls-Brückenschaltung (4) verbunden ist,
- wobei Zwischenkreiskondensator (5) an den Gleichstromausgang der Sechspuls-Brückenschaltung (4) angeschlossen ist,
- wobei die erste Reihenschaltung (71) der Vorladeschaltung (7) einerseits mit einem ersten (11) der Außenleiteranschlüsse des Eingangs (1) und andererseits mit dem Außenleiteranschluss einer ersten der Primärwicklungen (31, 32, 33) verbunden ist, und
wobei die zweite Reihenschaltung der Vorladeschaltung einerseits mit einem zweiten der Außenleiteranschlüsse (13) des Eingangs (1) und andererseits mit dem Außenleiteranschluss einer zweiten der Primärwicklungen (31, 32, 33) verbunden ist.

## Beschreibung

Die vorliegende Erfindung betrifft Dreiphasen-Gleichrichter
- mit einem Eingang mit drei Anschlüssen,
- mit drei steuerbaren Schaltern,
- mit einem Dreiphasenwechselstromtransformator mit einer Primärseite mit drei Primärwicklungen und einer Sekundärseite mit drei Sekundärwicklungen,
- mit einer gesteuerten Sechspuls-Brückenschaltung mit einem Wechselstromeingang mit drei Außenleiteranschlüssen und einem Gleichstromausgang mit zwei Gleichrichteranschlüssen,
- mit einem Zwischenkreiskondensator,
- mit einer Vorladeschaltung, umfassend
- eine erste Reihenschaltung mit einem Widerstandsbauelement mit einem negativen Temperaturkoeffizienten und
- eine zweite Reihenschaltung mit einem Widerstandsbauelement mit einem negativen Temperaturkoeffizienten und
- mit einer Steuerung zur Steuerung der drei steuerbaren Schalter,
- wobei jeder Anschluss des Eingangs mit einem Außenleiter eines Dreiphasenwechselstromnetzes verbunden werden kann,
- wobei jeder Anschluss des Eingangs über einen der steuerbaren Schalter mit einem Außenleiteranschluss einer der Primärwicklungen verbunden ist,
- wobei ein Außenleiteranschluss jeder der Sekundärwicklungen mit einem Außenleiteranschluss des Wechselstromeingangs der Sechspuls-Brückenschaltung verbunden ist,
- wobei Zwischenkreiskondensator an den Gleichstromausgang der Sechspuls-Brückenschaltung angeschlossen ist,
- wobei die erste Reihenschaltung der Vorladeschaltung einerseits mit einem ersten der Außenleiteranschlüsse des Eingangs und andererseits mit dem Außenleiteranschluss einer ersten der Primärwicklungen verbunden ist, und
- wobei die zweite Reihenschaltung der Vorladeschaltung einerseits mit einem zweiten der Außenleiteranschlüsse des Eingangs und andererseits mit dem Außenleiteranschluss einer zweiten der Primärwicklungen verbunden ist.

Aus dem Stand der Technik sind Gleichrichter mit einem Transformator, einer B6C-Brücke (gesteuerten Sechspulsbrückenschaltung) und einem Zwischenkreiskondensator bekannt. Die so genannten Vorladeschaltungen bei solchen Gleichrichtern dienen dazu die in dem Gleichrichter vorhandenen Energiespeicher aufzuladen, bevor der Gleichrichter in Betrieb genommen wird, um aus Wechselstrom Gleichstrom zu liefern. Die Energiespeicher, die aufgeladen werden, sind zum einen der Zwischenkreiskondensator und zum anderen die Wicklungen des Transformators. Durch das Aufladen der Energiespeicher mittels der Vorladeschaltung können so genannte Inrush-Ströme vermieden werden, die ein Mehrfaches des Stroms sein können, der im eingeschwungenen Zustand des Gleichrichters fließt.

In der Vergangenheit haben sich verschiedene Vorladeschaltungen etabliert. Einige davon sorgen nur für eine Vorladung des Zwischenkreiskondensators, andere sorgen auch für die Vorladung der Wicklungen des Transformators. Wie so oft, ist die umfassendere Lösung auch mit einem großen Aufwand verbunden. So weist die Vorladeschaltung bei der umfassenderen Lösung parallel zu jedem steuerbaren Schalter eine Reihenschaltung aus einem Schalter und einem Widerstandsbauelement mit einem negativen Temperaturkoeffizienten auf. Bei geöffneten steuerbaren Schaltern werden diese Schalter nun geschlossen. Dadurch fließt ein Strom, der sowohl die Wicklungen des Transformators als auch den Zwischenkreiskondensator auflädt. Dadurch werden die Inrush-Ströme oder Einschaltstromspitzen verhindert. Da es aber nun mehrere Maschen gibt, kann das bei einem asymmetrischen Transformator dazu führen, dass die Ströme unterschiedlich groß sind und die NTC-Widerstandsbauelemente unterschiedliche Temperaturen und in Folge dessen unterschiedliche ohmsche Widerstände aufweisen. Das kann, wie die Praxis zeigt, bei einem mehrfachen Ein- und Ausschalten zu Problemen führen, die dadurch vermieden werden können, dass man darauf achtet, dass der Transformator möglichst symmetrisch ist. Letzteres ist mit zusätzlichem Aufwand verbunden.

Bei einer einfacheren Lösung, die gegen eine Asymmetrie des Transformators robust ist und die auch weniger Komponenten benötigt als die letztgenannte Lösung, sind nur zwei der drei gesteuerten Schalter parallele Zweige aus einer Reihenschaltung aus einem Schalter und einem Widerstandsbauelement mit negativen Temperaturkoeffizienten angeordnet. Werden diese beiden Schalter geschlossen ergibt sich eine Masche über vier der sechs Wicklungen des Transformators und den Zwischenkreiskondensator durch die ein Strom fließt, der diese vier Wicklungen und den Zwischenkreiskondensator auflädt. Wird dann der Gleichrichter durch Schließen der steuerbaren Schalter in Betrieb genommen, fließt dann nur noch ein Inrush-Strom in die nicht vorgeladenen Wicklungen des Transformators.

Diese einfachere Lösung so zu verbessern, dass der Inrush-Strom in die nicht aufgeladenen Wicklungen vermieden werden kann, ist ein Problem, das durch die vorliegende Erfindung gelöst wird. Dazu wird auch eine Lösung vorgeschlagen, wie die Schalter der Vorladeschaltung benutzerfreundlich und auf einfache Weise realisiert werden können.

Diese Probleme werden durch Gleichrichter mit den Merkmalen des Anspruchs 1 bzw. des Anspruchs 5 gelöst.

Das Problem mit dem Inrush-Strom in die vorgeladenen Wicklungen wird dadurch gelöst, dass die Steuerung so eingerichtet ist, dass sie nach einem Aufladen des Zwischenkreiskondensators auf eine vorbestimmte Spannung, die drei steuerbaren Schalter so ansteuert, dass sie im Spannungsmaximum einer an dem dritten Anschluss des Eingangs anliegenden Außenleiterspannung geschlossen sind. Damit ist gemeint, dass die Schalter genau zu dem Zeitpunkt leitend werden, wenn die an dem dritten Anschluss des Eingangs anliegende Außenleiterspannung ein Maximum erreicht hat. Der Zeitpunkt zu dem die Schalter angesteuert werden, um zu schließen, liegt vor diesem Zeitpunkt, da aufgrund von Verzögerungen und/oder Totzeiten z.B. in der Steuerkette zu Ansteuerung der Schalter und/oder z.B. von Massenträgheit von beweglichen Elementen der steuerbaren Schalter eine Ansteuerung nicht zu einer sofortigen Herstellung einer leitenden Verbindung über die steuerbaren Schalter kommt.

Die Steuerung eines erfindungsgemäßen Gleichrichters kann so eingerichtet sein, dass zu einem vorbestimmten Zeitpunkt bevor die Spannung am dritten Anschluss des Eingangs das Maximum erreicht, das Einschalten der drei steuerbaren Schalter ausgelöst wird, wobei der vorbestimmte Zeitpunkt um die Dauer eines Prozesses des Einschaltens vor dem Erreichen des Spannungsmaximums der Spannung am dritten Anschluss des Eingangs liegt und wobei der Prozess des Einschaltens mit der Auslösung des Einschaltens beginnt und mit dem Erreichen des geschlossenen Zustands der drei steuerbaren Schalter endet.

Erfindungsgemäß kann der Gleichrichter einen ersten Spannungssensor aufweisen, mit dem die Spannung über dem Zwischenkreiskondensator messbar ist, wobei ein Ausgang des ersten Spannungssensors mit der Steuerung verbunden ist. Mit diesem Sensor kann der Ladzustand des Zwischenkreiskondensators erfasst werden. Frühestens wenn der Zwischenkreiskondensator hinreichend aufgeladen ist, werden bei einem erfindungsgemäßen Gleichrichter von der Steuerung die steuerbaren Schalter zum Schließen angesteuert.

Ein erfindungsgemäßer Gleichrichter kann einen zweiten Spannungssensor aufweisen, mit dem die Spannung am dritten Anschluss des Eingangs messbar ist, wobei ein Ausgang des zweiten Spannungssensors mit der Steuerung verbunden ist. Mit diesem zweiten Spannungssensor wird die Spannung überwacht, die genau in dem Zeitpunkt, in dem leitende Verbindung über die Schalter hergestellt sein soll, ihr Maximum erreicht haben soll.

Das Problem der benutzerfreundlichen Realisierung und der einfachen Realisierung wird dadurch gelöst, dass die erste Reihenschaltung und die zweite Reihenschaltung der Vorladeschaltung je einen Schalter aufweisen, mit der das Vorladen
- des Zwischenkreiskondensators,
- der mittelbar an den ersten Anschluss des Eingangs angeschlossenen Primärwicklung und Sekundärwicklung des Dreiphasenwechselströmtransformators und
- der mittelbar an den zweiten Anschluss des Eingangs angeschlossenen Primärwicklung und der Sekundärwicklung des Dreiphasenwechselstromtransformators
- ein- und ausgeschaltet werden kann, und
- dass die beiden Schalter der Vorladeschaltung mechanisch gekoppelt sind, so dass sie nur gleichzeitig betätigbar sind.

Das Ein- und Ausschalten der Vorladeschaltung erfolgt aufgrund der mechanischen Kopplung der Schalter immer gleichzeitig, was die Benutzung der Vorladeschaltung erleichtert.

Erfindungsgemäß ist es möglich, dass der Gleichrichter einen weiteren Schalter aufweist, der mechanisch mit den beiden Schaltern der Vorladeschalter gekoppelt ist, so dass dieser nur gleichzeitig mit den Schaltern der Vorladeschaltung betätigbar ist. Ein erfindungsgemäßer Gleichrichter kann eine Ruhestromschleife aufweisen, die an die Steuerung angeschlossen ist. Der weitere Schalter kann ein Element in dieser Ruhestromschleife sein, sodass mittels eines Stroms durch die Ruhestromschleife die Stellung des weiteren Schalters erfasst werden kann. Da dieser weitere Schalter mechanisch mit den Schaltern der Vorladeschaltung gekoppelt ist, wird damit auch die Stellung der Schalter der Vorladeschaltung überwacht.

Die beiden Schalter der Vorladeschaltung und ggf. der weitere Schalter können erfindungsgemäß Schalter eines zweipoligen Leistungsschalters, ggf. eines dreipoligen Leistungsschalters sein. Leistungsschalter, insbesondere solche für die Montage auf einer Hutschiene, wie sie in Schaltschränken zu finden sind, werden in großer Stückzahl von verschiedenen Herstellern angeboten. Sie können daher kostengünstig beschafft werden. Zudem sind Leistungsschalter für die Montage auf einer Hutschiene so gestaltet, dass sie ohne Aufwand mechanisch miteinander gekoppelt werden können, so dass mehrere Leistungsschalter nur gleichzeitig ein- und ausgeschaltet werden können.

Ein erfindungsgemäßer Gleichrichter kann einen Arbeitsstromauslöser aufweisen. Auch dieser kann mechanisch mit den beiden Schaltern der Vorladeschaltung gekoppelt sein, so dass dieser nur gleichzeitig mit den Schaltern der Vorladeschaltung betätigbar ist. Im Gegensatz zu dem weiteren Schalter, der in der Ruhestromschleife als Sensor genutzt wird, mit dem die Schalterstellung der Schalter der Vorladeschaltung überwacht werden kann, kann der Arbeitsstromauslöser dazu genutzt werden, alle mechanisch miteinander gekoppelten Schalter gleichzeitig zu betätigen. Dazu kann der Arbeitsstromauslöser mit der Steuerung verbunden sein. Die Steuerung kann so eingerichtet sein, dass bei einem Auftreten eines Fehlers im Gleichrichter oder in der Peripherie des Gleichrichters die Steuerung einen Strom über den Arbeitsstromauslöser leitet, um die Schalter der Ladeschaltung zu öffnen. Die Vorladeschaltung kann dadurch gesteuert ausgeschaltet werden, wenn dies notwendig sein sollte. Zum Beispiel kann die Vorladeschaltung ausgeschaltet werden, wenn das aufgrund eines Fehlers, den die Steuerung feststellt oder der der Steuerung mitgeteilt wird, sinnvoll ist.

Die Steuerung kann auch mit Stromrichterventilen der B6C-Brücke verbunden sein. Die Steuerung kann dazu eingerichtet sein, auch die B6C-Brücke zu steuern oder zu regeln.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:

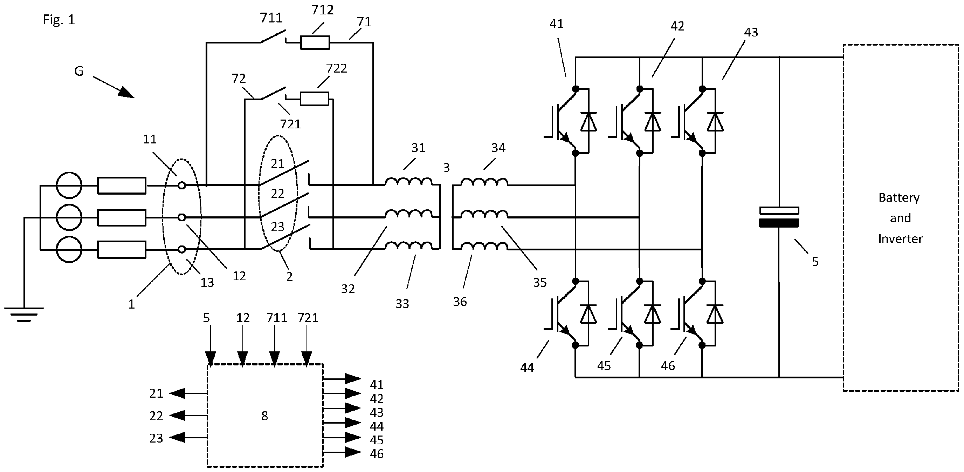

- Fig. 1: ein vereinfachtes Schaltbild eines erfindungsgemäßen Gleichrichters

Der erfindungsgemäße Gleichrichter G hat einen Wechselstromeingang 1, über den der Gleichrichter zum Beispiel an ein Dreiphasen-Wechselstromnetz angeschlossen werden kann. Der Eingang 1 hat dazu drei Anschlüsse 11, 12, 13. An jeden der Anschlüsse 11, 12, 13 kann einer der Außenleiter des Dreiphasenwechselstromnetzes angeschlossen werden.

Der Gleichrichter G weist drei steuerbare Schalter 21, 22, 23 auf. Ein erster Anschluss jedes steuerbaren Schalters 21, 22, 23 ist mit einem der drei Anschlüsse 11, 12, 13 verbunden. Ein Steueranschluss jedes steuerbaren Schalters 21, 22, 23 ist mit einer Steuerung 8 des Gleichrichters G verbunden. Jeder steuerbare Schalter 21, 22, 23 hat einen zweiten Anschluss.

Der Gleichrichter G weist einen DreiphasenWechselstromtransformator 3 auf. Wicklungen 31, 32, 33 einer Primärseite des Transformators 3 sind im Stern geschaltet. Grundsätzlich wäre es auch möglich, dass die Wicklungen der Primärseite im Dreieck geschaltet sind. Der zweite Anschluss jedes steuerbaren Schalters 21, 22, 23 ist mit einer der Wicklungen 31, 32, 33 verbunden.

Wicklungen 34, 35 ,36 einer Sekundärseite des Transformators sind ebenfalls im Stern geschaltet. Anschlüsse der Wicklungen 34, 35, 36 der Sekundärseite sind mit Außenleiteranschlüssen ein Wechselstromseite einer B6C-Brücke 4 des Gleichrichters verbunden Die B6C-Brücke ist aus IGBT 41, 42, 43, 44, 45, 46 als Stromrichterventilen aufgebaut. Es könnten anstelle der IGBT auch andere Stromrichterventile verwendet werden, zum Beispiel MOSFETs..

An eine Gleichstromseite der B6C-Brücke ist ein Zwischenkreiskondensator 5 angeschlossen.

Der Gleichrichter weist eine Steuerung 8 auf, die die Stromrichterventile 41, 42, 43, 44, 45, 46 und auch die steuerbaren Schalter 21, 22, 23 steuert.

Der Gleichrichter G weist zu Vermeidung von Einschaltstromspitzen eine Vorladeschaltung 7 auf, mit der vor einem Einschalten des Gleichrichters G Energiespeicher in der Schaltung des Gleichrichters aufgeladen werden können. Bei den Stromspeichern eines Gleichrichters mit dieser Topologie handelt es sich um die Wicklungen 31, 32, 33, 34, 35, 36 und den Zwischenkreiskondensator 5.

Die Vorladeschaltung 7 weist zwei Reihenschaltungen 71, 72 auf aus einem Schalter 711, 721 und einem Widerstandsbauelement 712, 722 mit negativen Temperaturkoeffizienten (NTC-Widerstandsbauelement) auf. Die erste Reihenschaltung 71 ist parallel zu dem steuerbaren Schalter 21 angeordnet und mit dem ersten Anschluss 11 des Eingangs 1 verbunden. Die zweite Reihenschaltung 72 ist parallel zu dem steuerbaren Schalter 23 angeordnet und mit dem dritten Anschluss des Eingangs 1 verbunden.

Sind die steuerbaren Schalter 21, 22, 23 geöffnet und die Schalter 711, 712 der Vorladeschaltung 7 geschlossen bildet sich ein Stromkreis vom ersten Anschluss 11 des Eingangs 1 über
- die erste Reihenschaltung 71,
- die Primärwicklung 31 und die Sekundärwicklung 34 des Transformators 3,
- die Stromrichterventile 41, 46 der B6C-Brücke 4,
- den Zwischenkreiskondensator 5,
- die Stromrichterventile 43, 44 der B6C-Brücke,
- die Sekundärwicklung 36 und die Primärwicklung 33 des Transformators 4,
- die zweite Reihenschaltung 72
zum dritten Anschluss 13 des Eingangs 1.

Fließt ein Strom durch diesen Stromkreis, werden alle Energiespeicher in diesem Stromkreis aufgeladen also die Wicklungen 31, 33, 34, 36 und der Zwischenkreiskondensator 5. Da durch die Wicklungen 31, 33, 34, 36 der gleiche Strom fließt, werden diese gleich stark aufgeladen. Die Vorladeschaltung 7 ist so aufgebaut, dass nicht alle Energiespeicher des Gleichrichters G aufgeladen werden können, sondern nur die Wicklungen 31, 33, 34, 36 und der Zwischenkreiskondensators 5, nicht aber die Wicklungen 32, 35. Diese Wicklungen 32, 35 sind also nicht vorgeladen und beim Schließen der steuerbaren Schalter 21, 22, 23 könnte es zu Einschaltstromspitzen kommen.

Diese Einschaltstromspitzen können dadurch vermieden oder reduziert werden, dass die Steuerung die Schalter 21, 22, 23 so zum Schließen ansteuert, dass die Schalter genau dann geschlossen und leitend sind, wenn am Anschluss 12 des Eingangs 1 ein Maximum der anliegenden Versorgungspannung erreicht ist.

Die Steuerung 8 muss dazu so programmiert sein, dass trotz eventuell prozessbedingter oder bauteilbedingter Verzögerungen und/oder Totzeiten die Schalter 21, 22, 23 bei Eintritt des Spannungsmaximums leitend sind. Da diese Zeiten ermittelt werden können und bekannt sind, ist es möglich diese Zeiten bei der Programmierung der Steuerung zu berücksichtigen.

Die Steuerung 8 des dargestellten Gleichrichters G und auch jedes anderen erfindungsgemäßen Gleichrichters kann eine Phasenregelschleife (PLL) umfassen mittels der der richtige Zeitpunkt zum Ansteuern der Schalter 21, 22, 23 eingestellt werden kann. Dazu werden der Steuerung ein Messwert der Spannung des Zwischenkreiskondensators 5, die Phasenlage des Stroms am Anschluss 12 und Signale zugeführt, die die Stellungen der Schalter 711, 712 angeben.

## Patentansprüche

1. Dreiphasen-Gleichrichter (G)
- mit einem Eingang (1) mit drei Anschlüssen (11, 12, 13),
- mit drei steuerbaren Schaltern (21, 22, 23),
- mit einem Dreiphasenwechselstromtransformator (3) mit einer Primärseite mit drei Primärwicklungen (31, 32, 33) und einer Sekundärseite mit drei Sekundärwicklungen (34, 35, 36),
- mit einer gesteuerten Sechspuls-Brückenschaltung (4) mit einem Wechselstromeingang mit drei Außenleiteranschlüssen und einem Gleichstromausgang mit zwei Gleichrichteranschlüssen,
- mit einem Zwischenkreiskondensator (5),
- mit einer Vorladeschaltung (7), umfassend
- einer ersten Reihenschaltung (71) mit einem Widerstandsbauelement (712) mit einem negativen Temperaturkoeffizienten und
- einer zweiten Reihenschaltung (72) mit einem Widerstandsbauelement (722) mit einem negativen Temperaturkoeffizienten,
und
- mit einer Steuerung (8) zur Steuerung der drei steuerbaren Schalter (21, 22, 23),
- wobei jeder Anschluss (11, 12, 13) des Eingangs (1) mit einem Außenleiter eines Dreiphasenwechselstromnetzes verbunden werden kann,
- wobei jeder Anschluss (11, 12, 13) des Eingangs (1) über einen der steuerbaren Schalter (21, 22, 23) mit einem Außenleiteranschluss einer der Primärwicklungen (31, 32, 33) verbunden ist,
- wobei ein Außenleiteranschluss jeder der Sekundärwicklungen (34, 35, 36) mit einem Außenleiteranschluss des Wechselstromeingangs der Sechspuls-Brückenschaltung (4) verbunden ist,
- wobei Zwischenkreiskondensator (5) an den Gleichstromausgang der Sechspuls-Brückenschaltung (4) angeschlossen ist,
- wobei die erste Reihenschaltung (71) der Vorladeschaltung (7) einerseits mit einem ersten (11) der Außenleiteranschlüsse des Eingangs (1) und andererseits mit dem Außenleiteranschluss einer ersten der Primärwicklungen (31, 32, 33) verbunden ist, und
- wobei die zweite Reihenschaltung der Vorladeschaltung einerseits mit einem zweiten der Außenleiteranschlüsse (13) des Eingangs (1) und andererseits mit dem Außenleiteranschluss einer zweiten der Primärwicklungen (31, 32, 33) verbunden ist,
**dadurch gekennzeichnet,**
- **dass** die Steuerung (8) so eingerichtet ist, dass sie nach einem Aufladen des Zwischenkreiskondensators (5) auf eine vorbestimmte Spannung, die drei steuerbaren Schalter (21, 22, 23) so ansteuert, dass sie im Spannungsmaximum einer an dem dritten Außenleiteranschluss (12) des Eingangs anliegenden Außenleiterspannung geschlossen sind.

2. Gleichrichter (G) nach Anspruch 1, **dadurch gekennzeichnet, dass** der Gleichrichter (G) einen ersten Spannungssensor aufweist, mit dem die Spannung über dem Zwischenkreiskondensator (5) messbar ist und dass ein Ausgang des ersten Spannungssensors mit der Steuerung (8) verbunden ist.

3. Gleichrichter (G) nach Anspruch 1 oder 2, **dadurch gekennzeichnet, dass** der Gleichrichter (G) einen zweiten Spannungssensor aufweist, mit dem die Spannung am dritten Anschluss (12) des Eingangs messbar ist und dass ein Ausgang des zweiten Spannungssensors mit der Steuerung (8) verbunden ist.

4. Gleichrichter (G) nach einem der Ansprüche 1 bis 3, **dadurch gekennzeichnet, dass** die Steuerung (8) eingerichtet ist, zu einem vorbestimmten Zeitpunkt bevor die Spannung am dritten Anschluss des Eingangs das Maximum erreicht, das Einschalten der drei steuerbaren Schalter (21, 22, 23) auszulösen, wobei der vorbestimmte Zeitpunkt um die Dauer eines Prozesses des Einschaltens vor dem Erreichen des Spannungsmaximums der Spannung am dritten Anschluss (12) des Eingangs (1) liegt und wobei der Prozess des Einschaltens mit der Auslösung des Einschaltens beginnt und mit dem Erreichen des Geschlossenen Zustands der drei steuerbaren Schalter (21, 22 ,23) endet.

5. Gleichrichter (G) nach dem Oberbegriff des Anspruchs 1 oder nach einem der Ansprüche 1 bis 4, **dadurch gekennzeichnet,**
- **dass** die erste Reihenschaltung (71) und die zweite Reihenschaltung (72) der Vorladeschaltung je einen Schalter (711, 721) aufweisen, mit der das Vorladen
- des Zwischenkreiskondensators (59),
- der mittelbar an den ersten Anschluss (11) des Eingangs angeschlossenen Primärwicklung (31) und Sekundärwicklung (34) des Dreiphasenwechselstromtransformator (3) und
- der mittelbar an den zweiten Anschluss (13) des Eingangs (1) angeschlossenen Primärwicklung (33) und der Sekundärwicklung (36) des Dreiphasenwechselströmtransformator (3)
ein- und ausgeschaltet werden kann, und
- **dass** die beiden Schalter (711, 721) der Vorladeschaltung (7) mechanisch gekoppelt sind, so dass sie nur gleichzeitig betätigbar sind.

6. Gleichrichter (G) nach Anspruch 5, **dadurch gekennzeichnet, dass** der Gleichrichter (G) einen weiteren Schalter aufweist, der mechanisch mit den beiden Schaltern (711, 721) der Vorladeschaltung (7) gekoppelt ist, so dass dieser nur gleichzeitig mit den Schaltern (711, 721) der Vorladeschaltung (7) betätigbar ist.

7. Gleichrichter (G) nach Anspruch 6, **dadurch gekennzeichnet, dass** der Gleichrichter (G) eine Ruhestromschleife aufweist, die an die Steuerung (8) angeschlossen ist und von der der weitere Schalter ein Element ist, so dass mittels eines Stroms durch die Ruhestromschleife die Stellung des weiteren Schalters und damit auch der Schalter (711, 721) der Vorladeschaltung (7) erfassbar ist.

8. Gleichrichter (G) nach einem der Ansprüche 5 bis 7, **dadurch gekennzeichnet, dass** die beiden Schalter (711, 721) der Vorladeschaltung (7) und ggf. der weitere Schalter Schalter eines zweipoligen Leistungsschalters ggf. eines dreipoligen Leistungsschalters sind.

9. Gleichrichter (G) nach Anspruch 5 bis 8, **dadurch gekennzeichnet, dass** der Gleichrichter (G) einen Arbeitsstromauslöser aufweist, der mechanisch mit den beiden Schaltern (711, 721) der Vorladeschaltung (7) gekoppelt ist, so dass dieser nur gleichzeitig mit den (711, 721) der Vorladeschaltung (7) betätigbar ist.

10. Gleichrichter (G) nach Anspruch 9, **dadurch gekennzeichnet, dass** der Arbeitsstromauslöser mit der Steuerung (8) verbunden ist und dass die Steuerung (8) so eingerichtet ist, dass bei einem Auftreten eines Fehlers die Steuerung (8) einen Strom über den Arbeitsstromauslöser leitet, um die Schalter (711, 721) der Vorladeschaltung (7) zu öffnen.
